# EUROPÄISCHE PATENTSCHRIFT

(11) **EP 1 184 510 B1**
(45) Veröffentlichungstag und Bekanntmachung des Hinweises auf die Patenterteilung: **18.05.2005**
(21) Anmeldenummer: 01117166.7
(22) Anmeldetag: 14.07.2001
(51) Int. Cl.: D21D 5/24, B04C 5/28

(54) **Verbindungsmittel zum Anschluss eines Hydrozyklons**
Device for connecting a hydrocyclone
Dispositif pour connecter un hydrocyclone

(30) Priorität: 16.08.2000 DE 20014330 U; 16.08.2000 DE 20014329 U
(43) Veröffentlichungstag der Anmeldung: 06.03.2002
(73) Patentinhaber: Voith Paper Patent GmbH, 89522 Heidenheim (DE)
(72) Erfinder: Mannes, Wolfgang, 88213 Ravensburg-Bavendorf (DE); Hartmann, Rolf, 88250 Weingarten (DE)

(56) Entgegenhaltungen:
- US-A- 3 085 382
- US-A- 5 447 632

## Beschreibung

Die Erfindung betrifft Verbindungsmittel zum Anschluss eines Hydrozyklons an eine Verteil- und Sammelvorrichtung gemäß dem Oberbegriff des Anspruchs 1.

Solche Verbindungsmittel sind aus der US-A-5 447 632 bekannt.

Bekanntlich werden Hydrozyklone verwendet, um Flüssigkeiten, in denen sich Stoffe von unterschiedlichem Sinkverhalten befinden, durch starke Zentrifugalkräfte zu fraktionieren. So ist es z.B. möglich, die in einer Faserstoffsuspension, wie sie zur Erzeugung von Papier verwendet wird, enthaltenen Störstoffe aufzukonzentrieren und durch einen Rejektanschluss aus dem Hydrozyklon abzuleiten. Die von Störstoffen befreite Fraktion, nämlich der Gutstoff, wird dann durch den Gutstoffanschluss geführt und weiter verwendet. Es können aber auch bei entsprechend anderer Schaltung der Hydrozyklonanlage unerwünschte Leichtteile oder Luft abgeschieden werden. Diese Vorgänge sind an sich bekannt, ebenso die Tatsache, dass ein guter Effekt nur gewährleistet ist, wenn die Hydrozyklone eine bestimmte Größe nicht überschreiten. Bei einer Hydrozyklonanlage, die für größere Durchsatzmengen ausgelegt ist, wird daher eine Mehrzahl - oft sogar eine Vielzahl - von Hydrozyklonen benötigt. Diese werden dann parallel von der zu reinigenden Flüssigkeit durchströmt, was bedeutet, dass der Flüssigkeitsstrom in eine Vielzahl von kleineren Teilströmen aufgeteilt werden muss. Hierzu wird eine Verteil- und Sammelvorrichtung verwendet, an die die Hydrozyklone über geeignete Verbindungseinheiten angeschlossen sind. Die Verteil- und Sammelvorrichtung kann auch Anschlüsse zur Spülwasserzugabe in die Hydrozyklone enthalten.

Eine besondere Anforderung an Verbindungseinheiten dieser Art ist ihre Einfachheit, um sie kostengünstig herstellen und verwenden zu können. Auch die Hydrozyklone selbst sollen leicht zu montieren und zu Wartungszwecken leicht zu tauschen sein.

Hydraulische Störungen und Feststoffansammlungen oder ähnliches sollen an den Anschlussstellen vermieden werden. Die Erfüllung aller dieser Forderungen ist bei den bisher vorhandenen Anlagen nicht befriedigend gelöst.

Der Erfindung liegt daher die Aufgabe zu Grunde, die Verbindungsmittel zum Anschluss der Hydrozyklone mit einfachen Mitteln so zu gestalten, dass sie leicht und schnell anzubringen sind und ein sicherer Halt auch bei Überdruck gewährleistet ist.
Die Hydrozyklone sollen leicht angebracht und wieder entfernt werden können.

Diese Aufgabe wird durch die im Kennzeichen des Anspruchs 1 genannten Maßnahmen gelöst.

Die erfindungsgemäßen Verbindungsmittel bestehen aus relativ einfachen Teilen. Sie sind normalerweise in Serienfertigung herzustellen und bestehen oft aus Kunststoff oder Gummi. Die Befestigung an die Sammel- und Verteilvorrichtung kann ohne große Probleme auch vor Ort vorgenommen werden, wenn das gewünscht wird. Ein wichtiger Vorteil ist, dass die Montage, also das Anbringen der Verbindungsmittel, von außen an die Stoffrohre erfolgen kann. Es werden keine Schweiß- oder Lötapparate benötigt. Maßabweichungen der Anschlussöffnungen in den Verteil- und Sammelvorrichtungen werden bis zu einem gewissen Grad ausgeglichen. Die einzelnen Schritte der Montage werden nachfolgend noch erläutert.

Die Erfindung und ihre Vorteile werden beschrieben an Hand von Zeichnungen. Dabei zeigen:
- Fig. 1: ein Beispiel für eine erfindungsgemäß gestaltete Verbindung im Schnitt (Seitenansicht);
- Fig. 2: Ansicht vom Inneren eines Zuleitungsrohres auf die Verbindungsmittel;
- Fig. 3a - 3c: drei Montagezustände beim Einsetzen eines Verbindungsmittels;
- Fig. 4 + 5: je eine variierte Verbindung, oben hälftig geschnitten;
- Fig. 6 + 7: je eine Verteil- und Sammelvorrichtung mit angeschlossenen Hydrozyklonen;
- Fig. 8: einen geänderten Anschluss des Hydrozyklons;
- Fig. 9: eine Verbindung mit Druckmutter zur axialen Verspannung der Dichtung;
- Fig. 10: eine Verbindung mit Klammer zur axialen Verspannung der Dichtung;
- Fig. 11: eine ähnliche Einbausituation wie gemäß Fig. 5;
- Fig. 12+13: je eine Verteil- und Sammelvorrichtung mit angeschlossenen Hydrozyklonen.

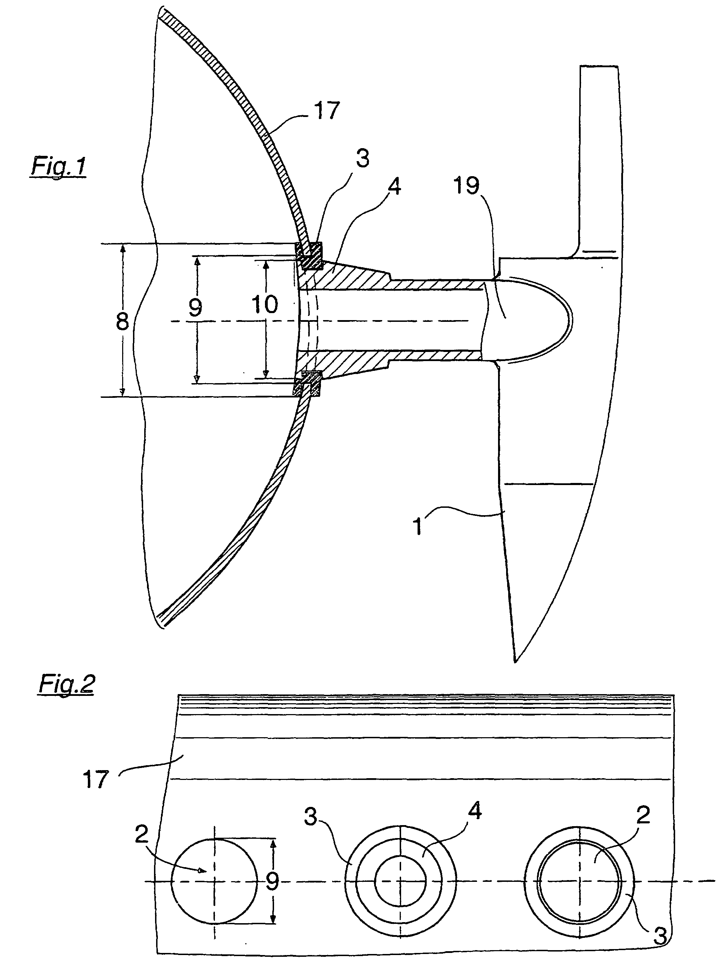

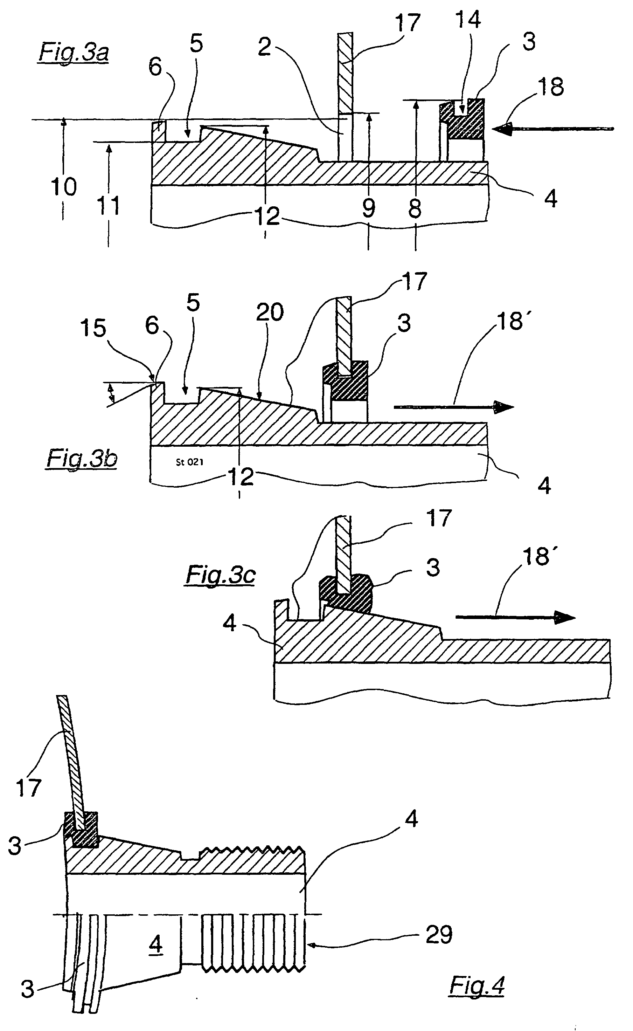

In Fig. 1 ist der fertig montierte Anschluss des Hydrozyklons 1 mit Hilfe einer erfindungsgemäß gestalteten Verbindung an ein Zuleitungsrohr 17, das zur Verteil- und Sammelvorrichtung gehört, dargestellt. Die Fig. 2 zeigt in vereinfachter Form eine Ansicht vom Inneren des Zuleitungsrohres 17 auf einige Anschlüsse, wobei die links gezeichnete Anschlussöffnung 2 ohne die Verbindungsmittel dargestellt ist. In Fig. 1 ist die Dichtung 3 in ihrer montierten Position, also eingesetzt in die Anschlussöffnung 2, sichtbar. Sie reicht vom Äußeren in das Innere der Verteil- und Sammelvorrichtung, also hier des Zulaufrohres 17 hinein. Da die Dichtung 3 eingespannt ist, sorgt sie für einen sicheren Halt der ganzen Verbindungseinheit in der Anschlussöffnung 2. Auch bei Innendruck im Zulaufrohr 17 kann sie nicht herausgedrückt werden. Die Details werden in den Figuren 3a bis 3c noch etwas genauer gezeigt, ebenso wie die Relation der Durchmesser 8, 9 und 10.

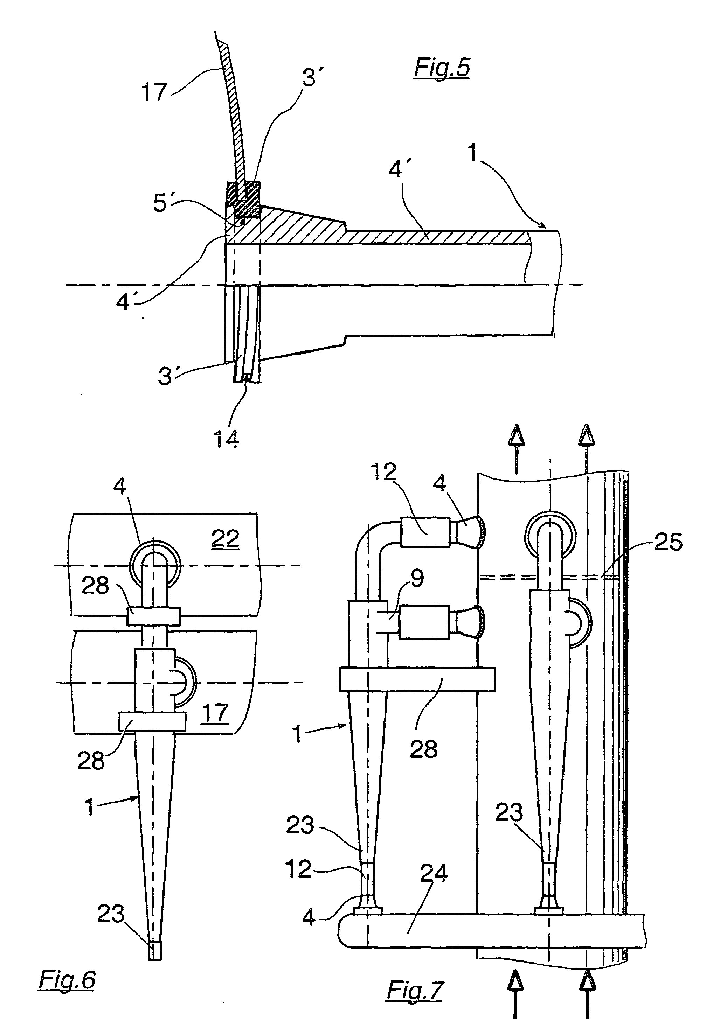

Das Rohrstück 4 ist hier gleichzeitig der Anschlussstutzen 19 des Hydrozyklons 1. Das kann die Kosten für die Verbindung senken und die Montage vereinfachen. Dieser Direktanschluss ist auch bei den anderen Ausführungsformen des Dichtungsbereiches denkbar. Das Rohrstück 4 kann aber auch, wie in Fig. 4, einen Schlauchnippel 29 aufweisen, wenn eine Schlauchverbindung zum Hydrozyklon hergestellt werden soll.

Die Darstellung in Fig. 2 zeigt außerdem rechts eine Anschlussöffnung 2, bei der lediglich die Dichtung 3 eingesetzt ist und in der Mitte eine Anschlussöffnung, die zusätzlich auch das Rohrstück 4 enthält.

Die Fig. 3a zeigt die Verbindung zu Beginn der Montage, und zwar in dem Zustand, in dem das Rohrstück 4 bereits durch die Anschlussöffnung 2 hindurchgesteckt ist, was von außen ohne weiteres möglich ist, da der Außendurchmesser 10 des Radialvorsprunges 6 kleiner ist als der Innendurchmesser 9 der Anschlussöffnung 2. Außerdem kann eine Fase 15 (Fig. 3b) am Einschubende des Rohrstückes 4 das Einschieben erleichtern und einen besseren Strömungseinlauf schaffen. Am Außendurchmesser der Dichtung 3 befindet sich eine umlaufende Nut 14, deren Grund einen Durchmesser hat, der etwa so groß ist wie der Innendurchmesser 9 der Anschlussöffnung 2. Die Dichtung 3 hat einen Außendurchmesser 8, der um einige Millimeter größer ist als der Innendurchmesser 9, kann aber, da sie elastisch ist, von außen in Montagerichtung 18 (Pfeil) ebenfalls eingeschoben werden, und zwar wie die Fig. 3 b zeigt, so weit, dass deren außen angebrachte Nut 14 die Wandung der Anschlussöffnung 2 aufnimmt. Wenn nun als nächster Montageschritt das Rohrstück 4 wieder nach außen bewegt wird (Montagerichtung 18'), gleitet der Innendurchmesser der Dichtung 3 an einem Außenkonus 20, der sich an entsprechender Stelle des Rohrstücks 4 befindet, so lange auf, bis sie in die Nut 5 eingerastet ist. Der Vorgang des Aufgleitens ist in der Fig. 3c gezeigt.

Oft enthält die Verteil- und Sammelvorrichtung medienführende Rohre, von denen z.B. eines - wie hier gezeichnet - als rundes Zulaufrohr 17 ausgebildet ist. In einem solchen Falle bilden die Ränder der Anschlussöffnungen 2 räumliche Kurven. Daher ist es eventuell erforderlich, die Nut 5 im Rohrstück 4 ebenfalls räumlich, d.h. nicht eben umlaufend, einzuarbeiten. Ähnliches gilt für den einbauseitigen Abschluss des Rohrstücks 4, wenn störende Kanten im Zulaufrohr vermieden werden sollen. Im Spritzgussverfahren ist das ohne weiteres herzustellen. Die Figuren 1, 4 und 11 zeigen exemplarisch solche Ausführungsformen.

Je nach dem, wie die geometrischen Verhältnisse an dieser Einbaustelle sind, kann es aber auch gemäß Fig. 5 genügen, das Rohrstück 4' mit einer eben umlaufenden Nut 5' zu versehen und auch das Rohrstück 4' rotationssymmetrisch zu machen. Voraussetzung ist, dass die elastische Verformbarkeit der Dichtung 3' so groß ist, dass eine für den Anwendungsfall ausreichend gleichmäßige Kraft über dem ganzen Umfang des Rohrstücks 4' erzeugt werden kann. Das wäre eine besonders einfache Ausführungsform. Welche der genannten Lösungen am günstigsten ist, hängt auch von den Betriebsdrücken ab. In der Regel ist der Betriebsdruck am Einlauf in den Hydrozyklon wesentlich höher als an den Ausläufen.

Die Figuren 6 und 7 zeigen zwei typische Möglichkeiten, um Hydrozyklone an eine Verteil- und Sammelvorrichtung anzuschließen. Diese enthält, wie die Fig. 6 zeigt, z.B. zwei parallel zueinander liegende Rohre, und zwar das weiter unten liegende Zulaufrohr 17 und das darüber liegende Gutstoffrohr 22. Die Hydrozyklone 1 sind mit diesen Rohren hydraulisch verbunden und über nur angedeutete Halter 28 zusätzlich fixiert. Die Hydrozyklone werden hier verwendet, um aus einer Suspension die Schwerteile abzuscheiden, wozu sich am unteren Ende eine Rejektöffnung 23 befindet.

Die Fig. 7 zeigt eine weitere Besonderheit, nämlich dass die Verteil- und Sammelvorrichtung durch ein senkrecht stehendes Rohr gebildet wird, in dem sich eine Trennplatte 25 befindet, die den Zulaufteil dieser Vorrichtung vom Gutstoffteil trennt. Die erfindungsgemäße Verbindung kann bei allen Anschlüssen, über die der Hydrozyklon 1 mit der Verteil- und Sammelvorrichtung verbunden ist, durchgeführt werden. Das deutet besonders diese Fig. 7 an, bei der auch die Rejektöffnung 23 an die Rejektleitung 24 auf diese Weise angeschlossen ist. Die Verbindung zu den Hydrozyklonen wird über Schläuche 12 hergestellt.

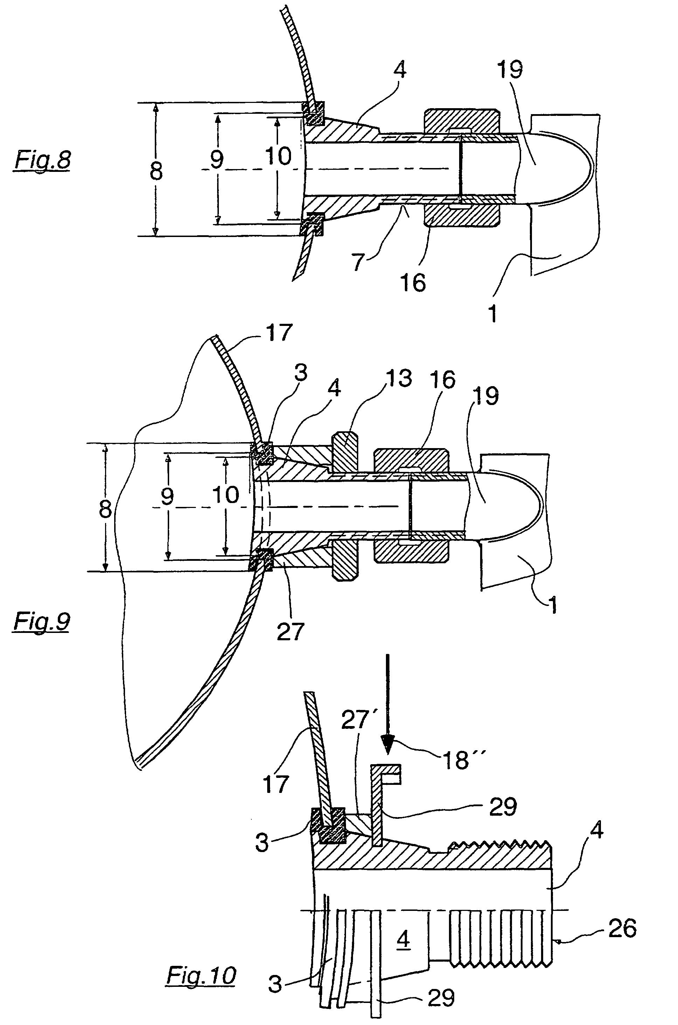

Bei dem hier in Fig. 8 gezeigten Beispiel ist das Rohrstück 4 nicht Teil des Hydrozyklons 1. Es trägt ein Gewinde 7 für eine Muffe 16. Diese Muffe 16 enthält zwei Innengewinde mit verschiedener Drehrichtung, also ein Links- und ein Rechtsgewinde, wodurch der ebenfalls mit einem Gewinde versehene Anschlussstutzen 19 des Hydrozyklons 1 an der Verbindungseinheit angeschraubt und natürlich bei Bedarf auch wieder gelöst werden kann.

Fig. 9 zeigt einen fertig montierten Anschluss des Hydrozyklons, bei dem eine zusätzliche Axialkraft zum Verspannen der Dichtung 3 erzeugt wird. Die Dichtung 3 ist in ihrer montierten Position, also eingesetzt in die Anschlussöffnung 2, sichtbar. Sie reicht vom Äußeren in das Innere der Verteil- und Sammelvorrichtung, also hier des Zulaufrohres 17, hinein. Das Rohrstück 4 trägt an seinem nach außen vorstehenden Ende ein Gewinde mit einer Druckmutter 13, die über ein Druckteil 27 eine bleibende Axialkraft auf die Dichtung 3 ausübt, wenn die Druckmutter 13 angezogen ist. Diese Axialkraft presst die Dichtung 3 zusammen und sorgt so für einen noch festeren Halt der ganzen Verbindung in der Anschlussöffnung 2. Auch bei starkem Innendruck im Zulaufrohr 17 kann sie nicht herausgedrückt werden.

Bei dem hier gezeigten Beispiel ist das Gewinde für die Druckmutter 13 und der entsprechende Teil des Rohrstücks 4 so weit verlängert, dass eine Muffe 16 auf demselben Gewinde laufen kann. Diese Muffe 16 entspricht der der Fig. 8.

Es gibt verschiedene Möglichkeiten, um die notwendige Axialkraft auf die Dichtung auszuüben. Neben der bereits in Fig. 9 gezeigten Verschraubung mit Hilfe einer Druckmutter 13 kann gemäß Fig. 10 eine Klammer 29 in eine entsprechende Nut des Rohrstückes 4 in radialer Montagerichtung 18" eingeschoben werden, und zwar in einer Lage, in der die Dichtung 3 bereits axial vorgespannt ist, so dass sich eine bleibende Axialkraft einstellt. Es ist aber auch denkbar, ein federndes Druckteil 27' zu verwenden und entsprechend vorzuspannen. So kann auch bei der nicht mehr axial verrückbaren Position der Klammer 21 für eine dauerhafte ausreichende Axialkraft gesorgt werden. Zum Anschluss für den Hydrozyklon ist hier ein Schlauchnippel 26 vorgesehen, was aber nicht auf diese Ausführungsform beschränkt ist. Es hängt von der Einbausituation und den Betriebsdrücken ab, ob eine Schlauchverbindung zum Hydrozyklon sinnvoll ist.

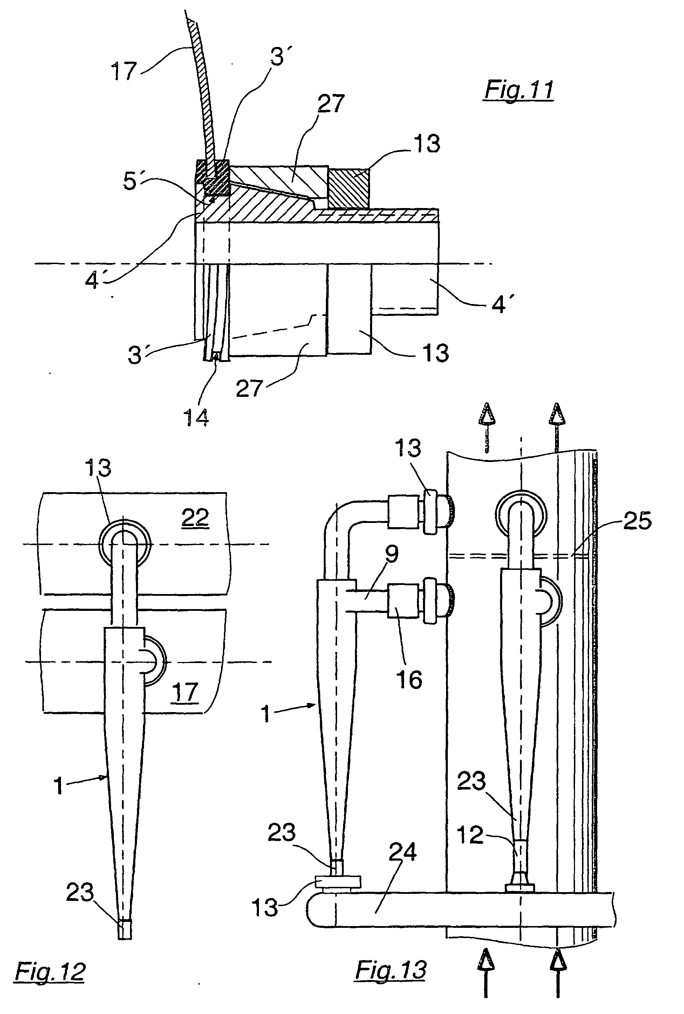

Die Figuren 12 und 13 zeigen Möglichkeiten, um mit Hilfe der beschriebenen Druckmuttern 13 Hydrozyklone an eine Verteil- und Sammelvorrichtung anzuschließen. Eine enthält, wie die Fig. 6 zeigt, z.B. zwei parallel zueinander liegende Rohre, und zwar das weiter unten liegende Zulaufrohr 17 und das darüber liegende Gutstoffrohr 22. Die Hydrozyklone scheiden aus einer Suspension die Schwerteile ab, wozu sich am unteren Ende eine Rejektöffnung 23 befindet.

Die Hydrozyklone sind hier ohne weitere Halter an der Verteil- und Sammelvorrichtung befestigt, da die erfindungsgemäße Verbindung genügend Festigkeit bietet. Das ist besonders dann zu erwarten, wenn Verbindungsmittel gemäß Fig. 9, 10 und 11 eingesetzt werden.

## Patentansprüche

1. Verbindungsmittel zum Anschluss eines Hydrozyklons (1) an eine Verteil- und Sammelvorrichtung für die Zu- oder Abführung von Flüssigkeiten,
wobei die Verteil- und Sammelvorrichtung mit Anschlussöffnungen (2) versehen ist, durch die bei Betrieb der Hydrozyklonanlage das Zu- oder Abführen der Flüssigkeit erfolgt,
**gekennzeichnet durch**
folgende Teile
- ein Rohrstück (4, 4'), dessen Einbauseite eine umlaufende Nut (5, 5') aufweist sowie einen sich an die Nut (5, 5')anschließenden Radialvorsprung (6), dessen Außendurchmesser (10) kleiner ist als der Innendurchmesser (9) der Anschlussöffnung (2) und der im Einbauzustand innerhalb der Verteil- und Sammelvorrichtung liegt;
- eine ringförmige, von außen in das Innere der Verteil- und Sammelvorrichtung hineinreichende Dichtung (3, 3'), deren Außendurchmesser (8) größer ist als der Innendurchmesser (9) der Anschlussöffnung (2) und die im Einbauzustand in der Nut (5, 5') des Rohrstücks (4, 4') eingespannt ist.

2. Verbindungsmittel nach Anspruch 1,
**dadurch gekennzeichnet,**
**dass** das Rohrstück (4, 4') einen Außenkonus (20) aufweist, der sich mit seinem größeren Durchmesser an die Nut (5, 5') anschließt.

3. Verbindungsmittel nach Anspruch 2,
**dadurch gekennzeichnet,**
**dass** der größere Außendurchmesser des Außenkonus (20) mindestens 4 mm größer ist als der Durchmesser (11) der Nut (5, 5').

4. Verbindungsmittel nach einem der voranstehenden Ansprüche,
**dadurch gekennzeichnet,**
**dass** der größte Außendurchmesser (10) des Radialvorsprunges (6) mindestens 6 mm größer ist als der Durchmesser (11) der Nut (5, 5').

5. Verbindungsmittel nach einem der voranstehenden Ansprüche,
**dadurch gekennzeichnet,**
**dass** der größte Außendurchmesser (10) des Radialvorsprungs (6) höchstens 2 mm kleiner ist als der Innendurchmesser (9) der Anschlussöffnungen (2).

6. Verbindungsmittel nach einem der voranstehenden Ansprüche,
**dadurch gekennzeichnet,**
**dass** der Radialvorsprung (6) eine Fase (15) hat, um das Einschieben in die Anschlussöffnungen (2) zu erleichtern.

7. Verbindungsmittel nach einem der voranstehenden Ansprüche,
**dadurch gekennzeichnet,**
**dass**
- eine Spanneinrichtung vorhanden ist zur Erzeugung einer dauerhaften Kraft zwischen dem Radialvorsprung (6) und einem außerhalb der Verteil- und Sammelvorrichtung anzubringendem Druckteil (27, 27'), welche die Dichtung (3, 3') axial zusammendrückt.

8. Verbindungsmittel nach einem der voranstehenden Ansprüche,
**dadurch gekennzeichnet,**
**dass** das Rohrstück (4, 4') ein Teil eines anzuschließenden Hydrozyklons ist.

9. Verbindungsmittel nach einem der Ansprüche 1 bis 7,
**dadurch gekennzeichnet,**
**dass** das Rohrstück (4, 4') einen Schlauchnippel (26) aufweist.

10. Verbindungsmittel nach einem der Ansprüche 7, 8 oder 9,
**dadurch gekennzeichnet,**
**dass** das Rohrstück (4, 4') ein Gewinde aufweist, auf dem eine Druckmutter (13) so aufgeschraubt und angezogen werden kann, dass sie gegen das Druckteil (27) drückt und dadurch die axiale Zusammendrückung der Dichtung (3, 3') bewirkt.

11. Verbindungsmittel nach Anspruch 10,
**dadurch gekennzeichnet,**
**dass** das Druckteil (27, 27') ein Teil der Druckmutter (13) ist.

12. Verbindungsmittel nach einem der Ansprüche 7, 8 oder 9,
**dadurch gekennzeichnet,**
**dass** eine Klammer (29) in eine entsprechende Nut des Rohrstückes (4, 4') eingeschoben ist in einer Lage, in der es direkt oder indirekt eine Axialkraft auf die Dichtung (3, 3') überträgt.

13. Verbindungsmittel nach einem der Ansprüche 1 bis 7 oder 10 bis 12,
**dadurch gekennzeichnet,**
**dass** ein Anschlussstutzen (19) des Hydrozyklons (1) mit Hilfe einer Schraubverbindung an das Rohrstück (4, 4') angeschlossen werden kann.

14. Verbindungsmittel nach Anspruch 13,
**dadurch gekennzeichnet,**
**dass** die Schraubverbindung durch eine Muffe (16) hergestellt wird, welche teilweise ein Links- und teilweise ein Rechtsgewinde aufweist, so dass durch Verdrehen der Muffe (16) die Verbindung zwischen Rohrstück (4, 4') und dem Anschlussstutzen (19) festgedreht bzw. gelöst werden kann.

15. Verbindungsmittel nach einem der voranstehenden Ansprüche,
**dadurch gekennzeichnet,**
- **dass** die Anschlussöffnung (2) mit einem nicht-ebenen Rand versehen ist und
- **dass** die Nut (5') im Rohrstück (4') dennoch eben ausgeführt ist und
- **dass** die Dichtung (3') die Abweichungen zwischen der ebenen Nut (5') und dem unebenen Rand der Anschlussöffnung (2) ausgleicht.

16. Verbindungsmittel nach Anspruch 15,
**dadurch gekennzeichnet,**
**dass** der Ausgleich auf Grund elastischer Verformung der Dichtung (3') erfolgt.

## Claims

1. A connection means for connecting a hydrocyclone (1) to a distribution and collecting device for supplying or removing liquids,
wherein the distribution and collecting device is provided with connection openings (2) through which the supply or removal of the liquid takes place on operation of the hydrocyclone unit,
**characterised by**
the following parts:
- a tube part (4, 4'), the installation side of which has a circumambient groove (5, 5') and a radial projection (6) adjoining the groove (5, 5'), the external diameter (10) of which projection is smaller than the internal diameter (9) of the connection opening (2) and which when installed lies inside the distribution and collecting device;
- an annular seal (3, 3') which extends from the outside into the interior of the distribution and collecting device, the external diameter (8) of which seal is greater than the internal diameter (9) of the connection opening (2) and which when installed is clamped in the groove (5, 5') of the tube part (4, 4').

2. A connection means according to Claim 1, **characterised in that** the tube part (4, 4') has an external cone (20) which adjoins the groove (5, 5') with its larger diameter.

3. A connection means according to Claim 2, **characterised in that** the larger external diameter of the external cone (20) is at least 4 mm larger than the diameter (11) of the groove (5, 5').

4. A connection means according to one of the preceding claims,
**characterised in that** the largest external diameter (10) of the radial projection (6) is at least 6 mm later than the diameter (11) of the groove (5, 5').

5. A connection means according to one of the preceding claims,
**characterised in that** the largest external diameter (10) of the radial projection (6) is at most 2 mm smaller than the internal diameter (9) of the connection openings (2).

6. A connection means according to one of the preceding claims,
**characterised in that** the radial projection (6) has a chamfer (15) to facilitate insertion into the connection openings (2).

7. A connection means according to one of the preceding claims,
**characterised in that**
- a clamping means is present for generating a permanent force between the radial projection (6) and a pressure part (27, 27') to be applied outside the distribution and collecting device, which means axially compresses the seal (3, 3').

8. A connection means according to one of the preceding claims,
**characterised in that** the tube part (4, 4') is part of a hydrocyclone which is to be attached.

9. A connection means according to one of Claims 1 to 7, **characterised in that** the tube part (4, 4') has a hose stem (26).

10. A connection means according to one of Claims 7, 8 or 9, **characterised in that** the tube part (4, 4') has a thread on which a pressure nut (13) can be screwed and tightened such that it presses against the pressure part (27) and thereby effects axial compression of the seal (3, 3').

11. A connection means according to Claim 10, **characterised in that** the pressure part (27, 27') is part of the pressure nut (13).

12. A connection means according to one of Claims 7, 8 or 9, **characterised in that** a clamp (29) is inserted into a corresponding groove in the tube part (4, 4') in a position in which it directly or indirectly transmits an axial force to the seal (3, 3').

13. A connection means according to one of Claims 1 to 7 or 10 to 12,
**characterised in that** a connection port (19) of the hydrocyclone (1) can be connected to the tube part (4, 4') using a screw connection.

14. A connection means according to Claim 13, **characterised in that** the screw connection is produced by a bushing (16) which has partly a left-hand and partly a right-hand thread, so that the connection between the tube part (4, 4') and the connection port (19) can be tightened or slackened by turning the bushing (16).

15. A connection means according to one of the preceding claims,
**characterised in that**
- the connection opening (2) is provided with a non-flat edge and
- that yet the groove (5') in the tube part (4') is made flat and
- that the seal (3') compensates for the fluctuations between the flat groove (5') and the non-flat edge of the connection opening (2).

16. A connection means according to Claim 15, **characterised in that** the compensation is effected due to elastic deformation of the seal (3').

## Revendications

1. Dispositif pour le raccordement d'un hydrocylone (1) à un dispositif de répartition et de collecte destiné à l'amenée ou à l'évacuation de liquides,
le dispositif de répartition et de collecte étant pourvu d'ouvertures de raccordement (2) par l'intermédiaire desquelles l'amenée ou l'évacuation du liquide est effectuée lors du fonctionnement de l'installation d'hydrocylones,
**caractérisé par**
les éléments suivants,
- une pièce tubulaire (4, 4') dont la face de montage comporte une rainure (5, 5') périphérique, ainsi qu'une saillie radiale (6) se raccordant à la rainure (5, 5'), dont le diamètre extérieur (10) est inférieur au diamètre intérieur (9) de l'ouverture de raccordement (2), et qui, à l'état monté, est située à l'intérieur du dispositif de répartition et de collecte ;
- un joint annulaire (3, 3') s'étendant de l'extérieur vers l'intérieur du dispositif de répartition et de collecte, dont le diamètre extérieur (8) est supérieur au diamètre intérieur (9) de l'ouverture de raccordement (2), et qui, à l'état monté, est enserré dans la rainure (5, 5') de la pièce tubulaire (4, 4').

2. Dispositif selon la revendication 1,
**caractérisé en ce que**
la pièce tubulaire (4, 4') comporte un cône extérieur (20) qui se raccorde à la rainure (5, 5') par son diamètre le plus important.

3. Dispositif selon la revendication 2,
**caractérisé en ce que**
le diamètre extérieur le plus important du cône extérieur (20) est au moins de 4 mm supérieur au diamètre (11) de la rainure (5, 5').

4. Dispositif selon l'une des revendications précédentes,
**caractérisé en ce que**
le diamètre extérieur (10) le plus important de la saillie radiale (6) est au moins de 6 mm supérieur au diamètre (11) de la rainure (5, 5').

5. Dispositif selon l'une des revendications précédentes,
**caractérisé en ce que**
le diamètre extérieur (10) le plus important de la saillie radiale (6) est au maximum de 2 mm inférieur au diamètre intérieur (9) des ouvertures de raccordement (2).

6. Dispositif selon l'une des revendications précédentes,
**caractérisé en ce que**
la saillie radiale (6) comporte un chanfrein (15) afin de faciliter l'insertion dans les ouvertures de raccordement (2).

7. Dispositif selon l'une des revendications précédentes,
**caractérisé en ce que**
- il est prévu un dispositif de serrage pour engendrer une force permanente entre la saillie radiale (6) et un élément de pression (27, 27') à fixer à l'extérieur du dispositif de répartition et de collecte, lequel comprime axialement le joint (3, 3').

8. Dispositif selon l'une des revendications précédentes,
**caractérisé en ce que**
la pièce tubulaire (4, 4') est une partie d'un hydrocylone à raccorder.

9. Dispositif selon l'une des revendications 1 à 7,
**caractérisé en ce que**
la pièce tubulaire (4, 4') comporte un raccord flexible (26).

10. Dispositif selon l'une des revendications 7, 8 ou 9,
**caractérisé en ce que**
la pièce tubulaire (4, 4') comporte un filetage sur lequel un écrou de pression (13) peut être vissé et serré de telle sorte qu'il pousse contre la pièce de pression (27), et assure ainsi la compression axiale du joint (3, 3').

11. Dispositif selon la revendication 10,
**caractérisé en ce que**
la pièce de pression (27, 27') est une partie de l'écrou de pression (13).

12. Dispositif selon l'une des revendications 7, 8 ou 9,
**caractérisé en ce que**
une clavette (29) est insérée dans une rainure correspondante de la pièce tubulaire (4, 4') dans une position dans laquelle elle transmet directement ou indirectement une force axiale au joint (3, 3').

13. Dispositif selon l'une des revendications 1 à 7 ou 10 à 12,
**caractérisé en ce que**
une tubulure de raccordement (19) de l'hydrocyclone (1) peut être raccordée à la pièce tubulaire (4,4') à l'aide d'une liaison vissée.

14. Dispositif selon la revendication 13,
**caractérisé en ce que**
la liaison vissée est établie par un manchon (16), comportant partiellement un filetage à gauche et partiellement un filetage à droite, de sorte que la liaison entre la pièce tubulaire (4, 4') et la tubulure de raccordement (19) puisse être serrée ou dissociée par une rotation du manchon (16).

15. Dispositif selon l'une des revendications précédentes,
**caractérisé en ce que**
- l'ouverture de raccordement (2) est pourvue d'un bord non plan,
- la rainure (5') pratiquée dans la pièce tubulaire (4') est néanmoins agencée de façon plane, et **en ce que**
- le joint (3') compense les écarts entre la rainure (5') plane et le bord non plan de l'ouverture de raccordement (2).

16. Dispositif selon la revendication 15,
**caractérisé en ce que**
la compensation a lieu en raison d'une déformation élastique du joint (3').
